**Europäisches Patentamt**

**European Patent Office**

**Office européen des brevets**

(19)

(11) Veröffentlichungsnummer : **0 027 592**
**B1**

(12) # EUROPÄISCHE PATENTSCHRIFT

(45) Veröffentlichungstag der Patentschrift :
26.01.83

(51) Int. Cl.³ : **A 22 C 13/00**

(21) Anmeldenummer : **80106059.1**

(22) Anmeldetag : **07.10.80**

(54) **Geraffte, in einen Netzschlauch verpackte schlauchförmige Nahrungsmittelhülle.**

(30) Priorität : **19.10.79 DE 2942356**

(43) Veröffentlichungstag der Anmeldung :
**29.04.81 Patentblatt 81/17**

(45) Bekanntmachung des Hinweises auf die Patenterteilung : **26.01.83 Patentblatt 83/04**

(84) Benannte Vertragsstaaten :
**AT BE CH DE FR GB IT LI NL SE**

(56) Entgegenhaltungen :
**EP A 0 021 189**
**DE A 2 511 770**
**DE A 2 733 996**
**DE B 1 217 238**
**FR A 2 303 480**

(73) Patentinhaber : **Gerhard Peter KG**
**Poststrasse 13**
**D-3036 Bomlitz II (DE)**

(72) Erfinder : **Peter, Gerhard**
**Poststrasse 18**
**D-3036 Bomlitz II (DE)**

(74) Vertreter : **Kutzenberger, Helga, Dr. et al**
**c/o Bayer AG Zentralbereich Patente Marken und Lizenzen**
**D-5090 Leverkusen 1, Bayerwerk (DE)**

EP 0 027 592 B1

## Geraffte, in einen Netzschlauch verpackte schlauchförmige Nahrungsmittelhülle

Die Erfindung betrifft eine geraffte, in einem Schlauchnetz verpackte, schlauchförmige Nahrungsmittelhülle, die eine Öffnungshilfe aufweist.

In US-A-3 639 130 wurde bereits vorgeschlagen, geraffte Schlauchhüllen für den Transport und für die Lagerung in Wasser mit einem Schlauchnetz zu umgeben, das einen Schnürverschluß oder Klammerverschluß aufweist. Eine solch geraffte und verpackte Nahrungsmittelhülle wird in der Regel bei der maschinellen Herstellung von Wurst auf das Stopfhorn (Tülle) der Wurstfüllmaschine aufgezogen und nach Entfernung des Netzschlauchverschlusses mit Wurstbrät portionsweise gefüllt. Dabei kann es beim Aufziehen der verpackten Schlauchhülle auf das Stopfhorn zu Schwierigkeiten kommen, da die Netzumhüllung die Enden der gerafften Nahrungsmittelhülle radial zusammendrückt. Dies versucht man zu beheben, indem man an den Enden der gerafften Nahrungsmittelhülle eine Stützscheibe, den Abmessungen des Stopfhornes bei der Bohrung und den Abmessungen der gerafften Hülle am Außendruckmesser maßlich entsprechen muß, in die Netzverpackung einlegt und so die Spannkraft der Netzverpackung im wesentlichen in Richtung der Achse lenkt. Damit werden Deformationen an den Enden vermieden und eine sichere axiale Fixierung der gerafften Nahrungsmittelhülle auf dem Stopfhorn ermöglicht.

Nachteilig ist bei diesem Verfahren, daß man eine Vielzahl von Stützscheiben mit den entsprechenden Maßen bereithalten muß und daß die Netzverpackung nach dem Öffnen und Aufbringen auf das Stopfhorn entfernt werden muß.

Aus der Lehre der FR-A-2 303 480 ist gleichfalls ein gerraffter Kunstdarm bekannt, der von einer flexiblen Röhre eingehüllt ist. Am Ende der durch den gerafften Kunstdarm gebildeten Röhre ist die flexible Umhüllung zwar durch einen Ring geführt, nach außen um diesen umgeschlagen und zurück auf die Außenseite der Umhüllung gestülpt, wodurch aber die oben aufgeführten Schwierigkeiten, insbesondere eine ausreichende Fixierung auf verschieden dimensionierte Stopfhörner, nicht behoben werden, da die verwendeten Ringe keine ausreichende Flexibilität aufweisen und nur zur Versteifung der Umhüllung und damit zum Schutz des gerafften Kunstdarms verwendet werden.

Es stellte sich daher die Aufgabe, die bekannte Netzschlauchverpackung für geraffte Nahrungsmittelschlauchhüllen so zu modifizieren, daß sich keine Schwierigkeiten beim Aufziehen der verpackten Schlauchhülle auf das Stopfhorn ergeben und ein und dieselbe Schlauchhülle auf verschieden dimensionierten Stopfhörner zum Füllen fest axial fixiert werden kann.

Gegenstand der vorliegenden Erfindung ist daher eine geraffte, in einem Netzschlauch verpackte Nahrungsmittelhülle, die innerhalb des Netzschlauches zumindest an einem Ende ein ringförmiges Stützelement aufweist, die dadurch gekennzeichnet ist, daß das kreisförmige Stützelement ein Gummiring mit kreisrundem Querschnitt ist.

Das andere Ende des Verpackungsnetzes kann in bekannter Weise durch einen Clip verschlossen werden, nachdem der Netzschlauch, von einem Ende der gerafften Nahrungsmittelhülle auf der Außenseite der Hülle zum anderen Ende und durch die Hohlung der Hülle wieder zum festen Ende der Nahrungsmittelhülle geführt, durch Ziehen an beiden Enden des Netzmaterials zur Verdichtung der Nahrungsmittelhülle gespannt und die beiden Netzenden auf gleiche Länge abgeschnitten worden sind. Gemäß einer bevorzugten Ausführungsform wird vor dem Verschließen mit dem Clip an diesem Öffnungsende noch eine Öffnungshilfe angebracht, die aus einer Hohlscheibe mit im Zentrum liegender Ringscheibe besteht, die mit einer Schneidekante versehen ist. Die verpackte, geraffte Nahrungsmittelhülle wird dann mit dem offenen Ende, an dem sich der Gummiring befindet, auf das Stopfhorn aufgezogen. Dabei stößt das Stopfhorn auf die im Zentrum liegende Ringschneide, die auf das Netz drückt, es zerschneidet und somit automatisch öffnet.

Gemäß einer weiteren bevorzugten Ausführungsform ist das Verpackungsnetz nicht mehr durch die zentrale Höhlung der gerafften schlauchförmigen Nahrungsmittelhülle geführt, sondern ist vom ersten Ende der gerafften schlauchförmigen Nahrungsmittelhülle an der Außenseite bis zu dem zweiten Ende geführt, an dem sich der Gummiring befindet, um diesen geschlungen und nochmals an der Außenseite der gerafften Nahrungsmittel zum ersten Ende zurückgeführt. Dort werden die beiden Netzenden in bekannter Weise gespannt, wodurch es auch noch möglich ist, den Gummiring, der von dem Netz umschlungen ist, auf einen gewünschten Durchmesser einzustellen und wie oben beschrieben verschlossen. Nach dem Aufziehen auf das Stopfhorn, wobei der Ring in der Regel noch etwas weiter gespannt wird, und nach dem Öffnen des Netzes, wodurch die Spannung des Ringes etwas gelockert wird, legt sich dieser fest um das Stopfhorn und fixiert somit das Verpackungsnetz fest um das Stopfhorn. Die Nahrungsmittelhülle kann, ohne daß das Netz entfernt werden muß, mühelos aus dem Verpackungsnetz herausgeführt und gefüllt werden. Nach Verbrauch der verpackten Nahrungsmittelhülle wird die Netzverpackung mit dem Ring von dem Stopfhorn einfach abgezogen.

Nach einer weiteren bevorzugten Ausführungsform ist der gerraffte Nahrungsmittelschlauch zwischen zwei Gummiringen eingespannt, die von dem Verpackungsnetz in der oben geschilderten Weise umschlungen wird. Wird das Verpackungsnetz in Form eines Doppelnetzes nur an der Außenseite der gerafften Nahrungsmittel geführt, so werden die Netzenden vorzugsweise nicht mit einem Clip an einem Ende der Nahrungsmittelhülle verbunden, sondern das zweite Netzende wird nach Umhüllung des zweiten Gummiringes auf der Außenseite der Nahrungsmittelhülle ungefähr bis zu deren Mitte zurückgeführt und dort mit dem ersten Ende des Verpackungsnetzes verschweißt.

Die gerafften und in einem Netzschlauch erfindungsgemäß und zu mindestens einen Gummiring aufweisenden verpackten Nahrungsmittelhüllen werden vorzugsweise wie folgt hergestellt:

Die geraffte Nahrungsmittelhülle wird in Form eines Hohlstabes von einer handelsüblichen Raffmaschine entnommen und in einem in der Länge passenden Netzschlauch gesteckt. An einem Ende wird der Gummiring über den Netzschlauch aufgefädelt und bis unmittelbar an die geraffte Schlauchhülle herangeführt. Dann wird der Netzschlauch über den Ring und die geraffte Schlauchhülle gestülpt, wodurch die geraffte Schlauchhülle mit einem Doppelnetz ummantelt wird.

Die netzverpackte Nahrungsmittelhülle kann nunmehr mit einem Clips in bekannter Weise verschlossen werden.

Es ist ferner auch möglich die netzverpackte Nahrungsmittelhülle in eine bekannte Spann- und Siegelvorrichtung einzufügen. Dann wird mit dem freiliegenden Ende der Netzverpackung so verfahren, daß ebenfalls zunächst ein Gummiring aufgefädelt wird, dieser bis an die schlauchförmig geraffte Nahrungsmittelhülle herangeschoben und auch das zweite Ende des Netzschlauches über den Ring und der Nahrungsmittelhülle gestülpt wird. Dann wird die zweite Seite der Halte- und Siegelvorrichtung aufgebracht und die beiden umgestülpten Netzenden in bekannter Weise verschweißt. Eventuell überflüssige Netzenden werden abgeschnitten.

Als Gummiringe mit einem kreisrunden Querschnitt werden vorzugsweise solche mit einem Querschnitt von 2 bis 8 mm verwendet.

Die als Öffnungshilfe verwendete Hohlscheibe und Ringscheibe, die eine Schnittkante aufweist, wird vorzugsweise aus ein thermoplastischen Kunststoff wie Polyamid, ABS Polystyrol hergestellt.

Das Verpackungsnetz ist üblicherweise ein Polyethylennetz und die Nahrungsmittelhülle besteht vorzugsweise aus Celluloseregenerat, die vor dem Füllen befeuchtet werden muß.

In einer Zeichnung ist die Nahrungsmittelhülle mit der neuen Verpackung in mehreren Ausführungsbeispielen dargestellt und nachstehend näher beschrieben.

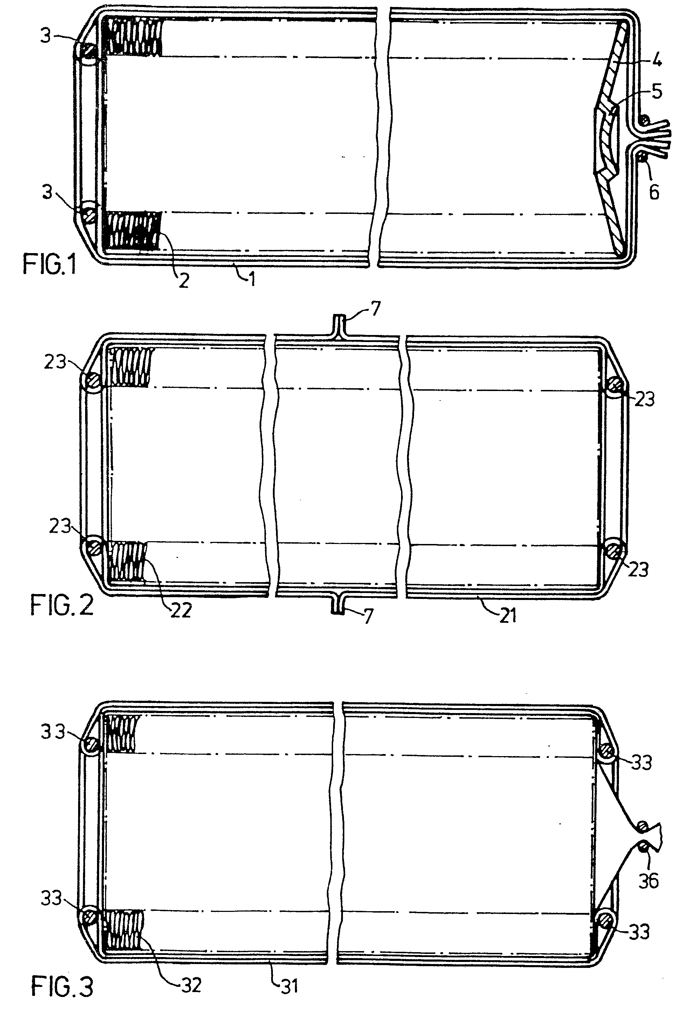

Figur 1 zeigt eine geraffte Nahrungsmittelhülle 2, die in einem Doppelnetz 1 aus Polyethylen verpackt ist und an einem Ende durch einen Gummiring 3 und am anderen Ende durch eine Öffnungshilfe, bestehend aus einer Hohlscheibe 4 und einer Ringscheibe 5 mit Schneidekante, versehen ist. Das Verpackungsnetz ist mit einem Clip 6 an einem Ende verschlossen.

Figur 2 zeigt eine geraffte Nahrungsmittelhülle 22, die in einem Doppelnetz 21 verpackt ist, wobei sich an beiden Enden der Nahrungsmittelhülle Gummiringe 23 befinden, um die das Verpackungsnetz geführt wurde. Das nur auf der Außenseite der Nahrungsmittelhülle 22 liegende Verpackungsnetz 21 ist ungefähr in der Mitte der Nahrungsmittelhülle 22 außen verschweißt 7.

Figur 3 ist eine Variation von Fig. 2 indem das Ende der Nahrungsmittelhülle 32 mittels eines Clips 36 verschlossen ist. Durch diese Maßnahme, für das Aufziehen auf das Stopfhorn einseitig offen, während bei der Ausführung nach Fig. 2 die Möglichkeit des willkürlichen Aufziehens gegeben ist.

## Ansprüche

1. Geraffte, in einen Netzschlauch verpackte Nahrungsmittelhülle (2, 22, 32), die innerhalb des Netzschlauches (1, 21, 31) zumindest an einem Ende ein ringförmige Stützelement aufweist, dadurch gekennzeichnet, daß das ringförmige Stützelement ein Gummiring (3, 23, 33) mit kreisrundem Querschnitt ist.

2. Verpackte Nahrungsmittelhülle nach Anspruch 1, dadurch gekennzeichnet, daß sich am anderen Ende der gerafften Nahrungsmittelhüle (12) als Öffnungshilfe eine Hohlscheibe (4) mit im Zentrum liegende Ringscheibe (5), die eine Schneidekante aufweist, befindet und dort die beiden Enden des Verpackungsnetzschlauches (1) mit einem Clip (6) verschlossen sind.

3. Verpackte Nahrungsmittelhülle nach Ansprüchen 1 und 2, dadurch gekennzeichnet, daß das Verpackungsnetz (21) um den Gummiring (23) geschlungen nur auf der Außenseite der gerafften Nahrungsmittelhülle (22) in Form eines Doppelnetzes (21) vorliegt.

4. Verpackte Nahrungsmittelhülle nach Ansprüchen 1 und 3, dadurch gekennzeichnet, daß sich am anderen Ende der gerafften Nahrungsmittelhülle (22) ein zweiter Gummiring (23) mit einem kreisrunden Querschnitt befindet.

5. Verpackte Nahrungsmittelhülle nach Ansprüchen 1 und 4, dadurch gekennzeichnet, daß die beiden Enden des Verpackungsnetzschlauches (21) auf der Außenseite der Nahrungsmittelhülle (22) verschweißt sind.

6. Verpackte Nahrungsmittelhülle nach Ansprüchen 3, 4 und 5, dadurch gekennzeichnet, daß die verpackte Nahrungsmittelhülle (32) an einer Seite mit einem Clip (36) verschlossen ist.

## Claims

1. Shirred foodstuff casing (2, 22, 32) packaged in a tubular net, which has, inside the tubular net (1, 21, 31) a ring-shaped supporting element at least at one end, characterised in that the ring-shaped supporting element is a rubber ring (3, 23, 33) with a circular cross-section.

2. Packaged foodstuff casing according to Claim 1, characterised in that at the other end of the shirred foodstuff casing (12) there is present, as an opening aid, a hollow disc (4) with a centrally located ring-shaped disc (5) possessing a cutting edge, and that at this end of the foodstuff casing the two ends of the packaging tubular net (1) are closed by means of a clip (6).

3. Packaged foodstuff casing according to Claims 1 and 2, characterised in that the packaging net (21) is looped over the rubber ring (23) and is present, in the form of a double net (21), only on the outside of the shirred foodstuff casing (22).

4. Packaged foodstuff casing according to Claims 1 and 3, characterised in that a second rubber ring (23) with a circular cross-section is present at the other end of the shirred foodstuff casing (22).

5. Packaged foodstuff casing according to Claims 1 and 4, characterised in that the two ends of the packaging tubular net (21) are welded together on the outside of the foodstuff casing (22).

6. Packaged foodstuff casing according to Claims 3, 4 and 5, characterised in that the packaged foodstuff casing (32) is closed by a clip (36) on one side.

**Revendications**

1. Enveloppe (2, 22, 32) pour aliment plissée, emballée dans un boyau réticulaire et qui présente à l'intérieur du boyau réticulaire (1, 21, 31) au moins à une extrémité un élément d'appui annulaire, caractérisée en ce que l'élément d'appui annulaire est une bague en caoutchouc (3, 23, 33) ayant une section transversale circulaire.

2. Enveloppe pour aliment emballée selon la revendication 1, caractérisée en ce que, à l'autre extrémité de l'enveloppe plissée pour aliment (12), il y a en tant que moyen d'ouverture un disque creux (4) comportant un disque annulaire (5) se trouvant au centre et qui présente un bord tranchant, et en ce que les deux extrémités du boyau réticulaire d'emballage (1) y sont fermées par un clip (6).

3. Enveloppe pour aliment emballée selon les revendications 1 et 2, caractérisée en ce que le filet d'emballage (21) entortillé autour de la bague en caoutchouc (23) ne se trouve que sur le côté externe de l'enveloppe plissée pour aliment (22) sous la forme d'un double filet (21).

4. Enveloppe pour aliment emballée selon les revendications 1 et 3, caractérisée en ce qu'à l'autre extrémité de l'enveloppe plissée pour aliment (22), il y a une deuxième bague en caoutchouc (23) ayant une section transversale circulaire.

5. Enveloppe pour aliment emballée selon les revendications 1 et 4, caractérisée en ce que les deux extrémités du boyau réticulaire d'emballage (21) sont soudées sur le côté externe de l'enveloppe pour aliment (22).

6. Enveloppe pour aliment emballée selon les revendications 3, 4 et 5, caractérisée en ce que l'enveloppe pour aliment emballée (32) est fermée d'un côté par un clip (36).

FIG.1

FIG.2

FIG.3